# FASCICULE DE BREVET EUROPEEN

(11) **EP 0 354 145 B1**
(45) Date de publication et mention de la délivrance du brevet: **03.11.1993**
(21) Numéro de dépôt: 89420291.0
(22) Date de dépôt: 01.08.1989
(51) Int. Cl.: C08G 77/388

(54) **Diorganopolysiloxane à fonction benzotriazole**
Benzotriazolgruppenhaltiges Diorganopolysiloxan
Benzotriazole group-containing diorganopolysiloxane

(30) Priorité: 04.08.1988 FR 8810777
(43) Date de publication de la demande: 07.02.1990
(73) Titulaire: RHONE-POULENC CHIMIE, 92408 Courbevoie Cédex (FR)
(72) Inventeur: Canivenc, Edith, F-69007 Lyon (FR); Forestier, Serge, F-77410 Claye Souilly (FR); Gay, Michel, F-69006 Lyon (FR); Lang, Gérard, F-95210 Saint-Gratien (FR); Richard, Hervé, F-75020 Paris (FR)
(74) Mandataire: Trolliet, Maurice

(56) Documents cités:
- GB-A- 2 077 280
- US-A- 4 349 602
- ANGEWANDTE CHEMIE vol.99, no.11, 1987, pages 1204, 1206, Weinheim, D;I.Cabrera et al.: "Photo und thermochrome flüssigkristalline Polysiloxane"
- DIE MAKROMOLEKULARE CHEMIE vol.7, no.12, décembre 1986, pages 771-775, Basel, CH; P.Strohriegel:"Syntesis and characterization of some novel polysiloxanes"
- DIE MAKROMULEKULARE CHEMIE vol.7, no.2, fev 1986, pages71-76, Basel, CH;G.W:Gray et al.:"Preparation of liquid crystalline polysiloxanes wtih terminal cyanogroups in the side chains"

## Description

La présente invention concerne un diorganopolysiloxane à fonction benzotriazole ; elle est le fruit d'une coopération entre les Sociétés l'OREAL et RHONE-POULENC CHIMIE.

Il est déjà connu de modifier, dans la chaîne et/ou en bout de chaîne, par des groupements organiques fonctionnels divers, des diorganopolysiloxanes dans le but de conférer à ces polymères silicones, des propriétés spécifiques.

Un moyen commode d'introduire ces groupements organiques fonctionnels est d'effectuer une réaction d'hydrosilylation en présence d'une quantité catalytiquement efficace d'un catalyseur au platine d'un diorgnaopolysiloxane porteur d'au moins un groupement SiH sur un composé organique porteur d'une insaturation alcénique.

Comme documents illustrant cet art antérieur on peut par exemple citer :
- les brevets US-A-2 970 150 et US-A-4 160 775 décrivant l'addition d'alcool allylique ou méthallylique sur un silane ou diorganopolysiloxane porteur d'au moins un groupement SiH,
- les brevets US-A-3 767 690 et US-A4 503 208 décrivant des diorganopolysiloxanes porteurs de groupes à fonction acrylate ou méthacrylate,
- le brevet US-A-4 640 967 décrivant des diorganopolysiloxanes porteurs de groupement époxy et/ou acrylate ou méthacrylate et leur réalisation comme composition de revêtement de fibres optiques,
- le brevet EP-A-0 088 842 décrivant des diorganopolysiloxanes porteurs de groupements benzophènone.

La présente invention a précisément pour objet de proposer de nouveaux diorganopolysiloxanes modifiés par des groupements organiques fonctionnels qui présentent d'une part un indice de réfraction élevé en vue de leur incorporation dans des compositions de revêtement pour fibres optiques et, d'autre part, conviennent comme lubrifiant des matières plastiques en particulier du PVC.

Les brevets US-A-4 316 033 et 4 373 060 décrivent des alcoxysilanes porteur de fonction benzotriazole F. Ces brevets décrivent la cohydrolyse de ces silanes fonctionnels avec de la silice colloidale et un alkyltrialcoxysilane en vue d'obtenir une résine silicone c'est-à-dire un polymère comportant essentiellement des motifs Q(SiO₂), T(CH₃SiO_{1,5}) et moins de 2 % molaire de motifs FSiO_{1,5}. Cette résine silicone, durcie, est utilisée comme revêtement de surfaces en matière plastique.

Ces brevets n'enseignent pas la préparation de diorganopolysiloxanes linéaires ou cycliques à fonction benzotriazole.

La présente invention concerne en effet un polymère diorganopolysiloxane modifié choisi parmi ceux de formule : 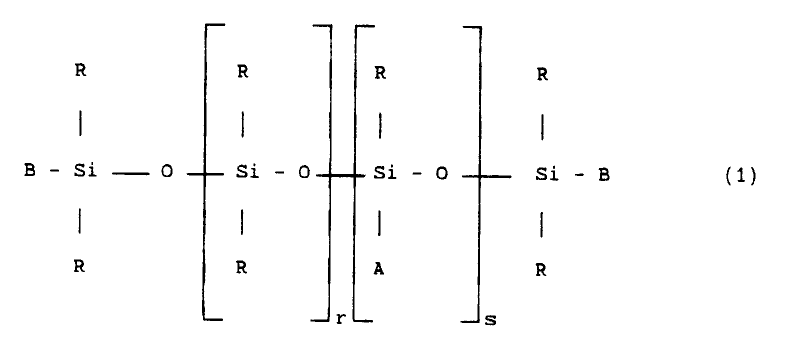
dans laquelle les symboles :
- R, identiques ou différents, sont choisis parmi les radicaux alkyle en C₁-C₁₀ , phényle et trifluoro-3,3,3 propyle, au moins 80 % en nombre des radicaux R étant méthyle,
- B, identiques ou différents, sont choisis parmi les radicaux R et le radical A,
- r est un nombre entier choisi entre 5 et 20 inclusivement,
- s est un nombre entier choisi entre 2 et 15 inclusivement
et de formule : 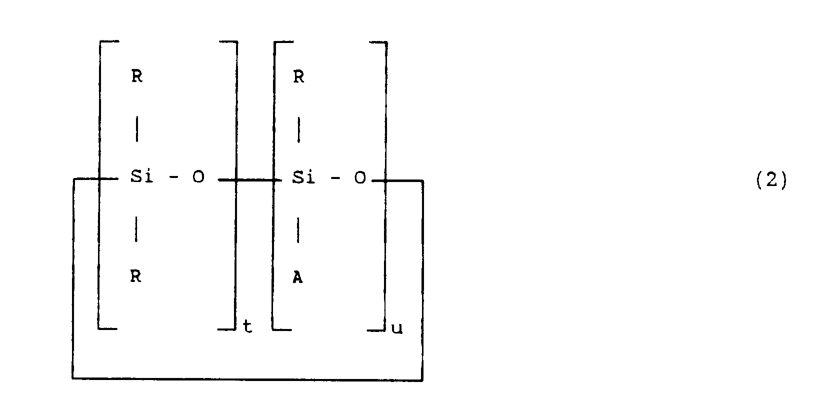
dans laquelle :
- R a la même signification qu'à la formule (1),
- u est un nombre entier compris entre 1 et 20 et
- t est un nombre entier entre 0 et 20 inclus,
- t + u est égal ou supérieur à 3.

Formules dans lesquelles A est un radical de formule 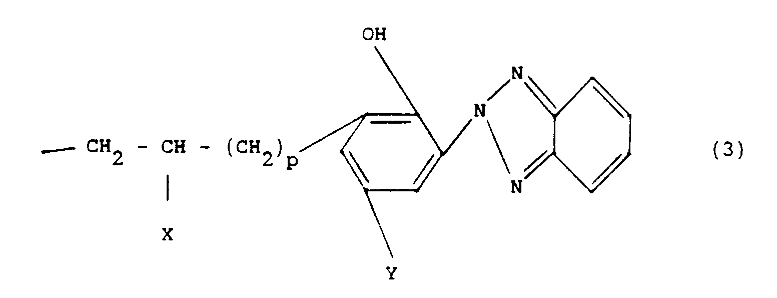
dans laquelle :
- X représente un atome d'hydrogène ou un radical alkyle en C₁-C₄
- p représente un nombre entier compris entre 1 et 10.
- Y représente un atome d'hydrogène ou un radical alkyle linéaire ou ramifié en C₁-C₈.

Les radicaux R alkyle préférés sont méthyle, éthyle, propyle, n-butyle, n-octyle et éthyl-2 hexyle. De préfèrence au moins 80 % en nombre des radicaux R sont méthyle.

On préfère plus particulièrement les polymères statistiques où à blocs de formule (1) et (2) présentant au moins l'une des caractéristiques suivantes :
- R est méthyle
- B est méthyle
- Y est méthyle
- p = 1
- X est un atome d'hydrogène ou méthyle
- t + u est compris entre 3 et 10 inclus
Pour préparer les polymères de formules (1) et (2), on peut par exemple partir du polymère correspondant dans lequel tous les radicaux A sont des atomes d'hydrogène.

Ce polymère est dénommé par la suite polymère à SiH ; les groupes SiH peuvent être présents dans la chaîne et/ou aux extrémités de chaîne. Ces polymères à SiH sont des produits bien connus dans l'industrie des silicones et sont généralement disponibles dans le commerce.

Ils sont par exemple décrits dans les brevets américains US-A-3 220 972, US-A-3 436 366, US-A-3 697 473 et US-A-4 340 709.

Ce polymère à SiH peut être donc choisi parmi ceux de formule : 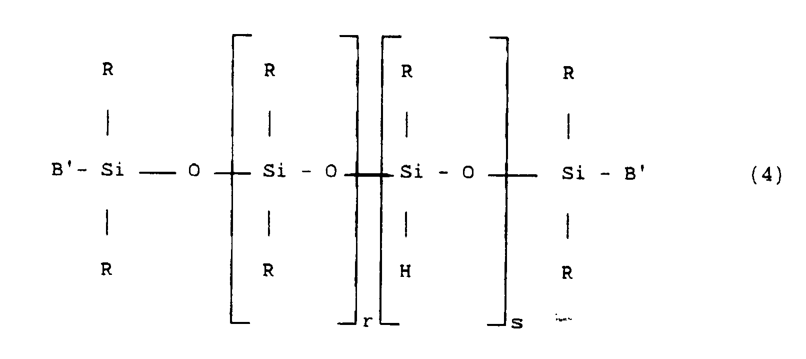
dans laquelle R, r et s ont la signification donnée ci-dessus pour la formule (1) et les radicaux B′, identiques ou différents, sont choisis parmi les radicaux R et un atome d'hydrogène,
et de formule : 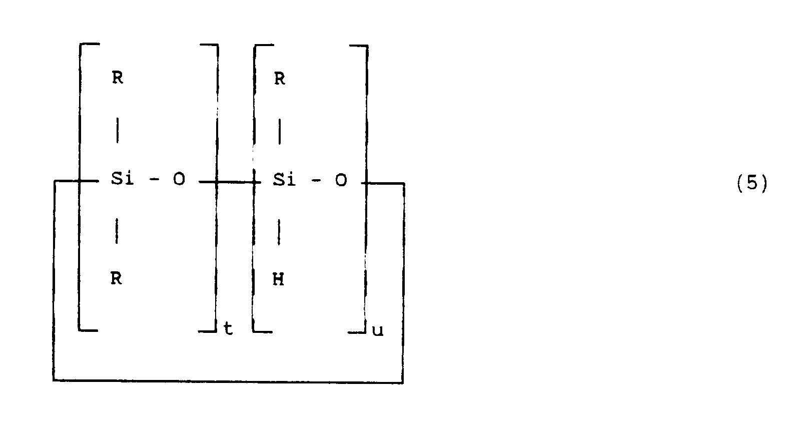
dans laquelle R, t et u ont la signification donnée ci-dessus pour la formule (2).

Sur ce polymère à SiH de formules (4) ou (5), on effectue une réaction d'hydrosilylation en présence d'une quantité catalytiquement efficace d'un catalyseur au platine sur un dérivé orgnaique de benzotriazole choisi parmi ceux de formule : 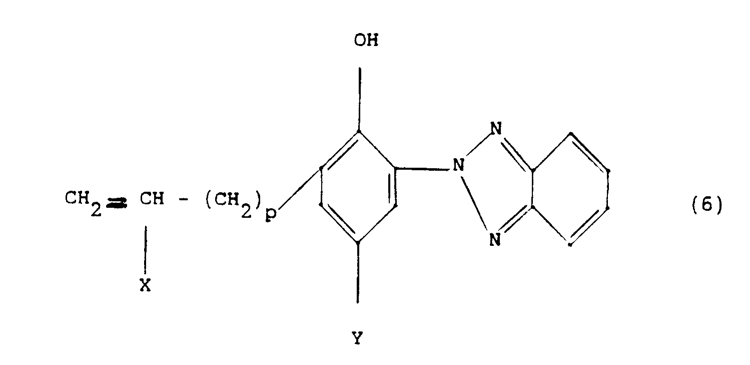
dans laquelle X, Y et p ont la même signification que ci-dessus.

Les produits de formule (6) et leur procédé de préparation sont notamment décrits dans les brevets US-4 316 033 et 4 373 060 précités.

Le procédé recommandé s'effectue en 2 étapes. Au cours de la première étape on fait réagir un halogénure d'alcényle de formule : 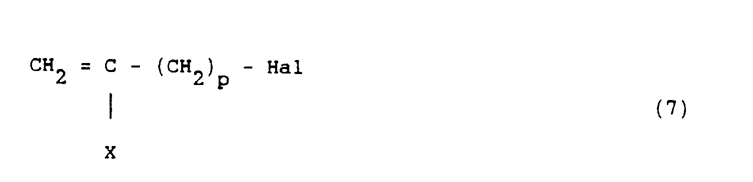
sur un benzotriazole de formule : 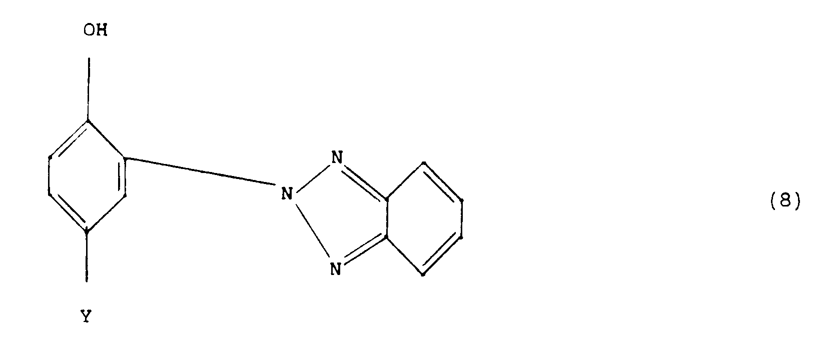
formules dans lesquelles X, Y et p ont la même signification que ci-dessus et Hal. représente un alogène de préférence le chlore ou le brome.

Cette première étape est effectuée, en présence d'une base par exemple en présence d'un hydroxyde ou carbonate de métal alcalin ou alcalino-terreux ou d'un amidure, alcoolate ou hydrure alcalin, dans un solvant compatible avec la nature de la base tel que l'eau ou un solvant orgnaique tel qu'un alcool, le dioxane, le diméthylsulfoxyde ou le diméthylformamide, à une température comprise entre la température ambiante et le point d'ébullition du solvant, et l'on obtient le produit de formule : 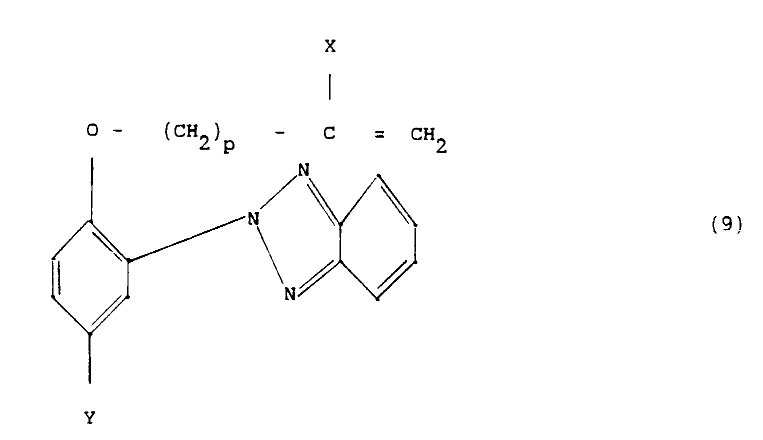
Sur le composé de formule (9), ou X, Y et p ont la même signification que ci-dessus, on effectue un réarrangement de CLAISEN pour obtenir le produit désiré de formule (6).

Le réarrangement de CLAISEN peut être effectué dans les conditions décrites par TARBELL (Organic Réactions, Vol. 2, John WILEY, New-York, 1944, page 1), par chauffage à au moins 170 °C environ du composé de formule (9), éventuellement en présence d'un solvant.

Les catalyseurs au platine utilisés pour réaliser la réaction d'hydrosilylation des polymères de formules (4) ou (5) sur le dérivé organique de formule (6) sont amplement décrits dans la littérature, on peut en particulier citer les complexes du platine et d'un produit organique décrit dans les brevets américains US-A-3 159 601, US-A-3 159 602, US-A-3 220 972 et les brevets européens EP-A-57 459, EP-A-188 978 et EP-A-190 530 et les complexes du platine et d'organopolysiloxane vinylé décrits dans les brevets américains US-A-3 419 593, US-A-3 377 432 et US-A-3 814 730.

Pour faire réagir le polymère à SiH de formules (4) ou (5) sur le dérivé de formule (6), on utilise généralement une quantité de catalyseur au platine calculée en poinds de platine métal comprise entre 5 et 600 ppm, de préférence entre 10 et 200 ppm, basés sur le poids de polymère à SiH de formules (4) ou (5).

La réaction d'hydrosilylation peut avoir lieu en masse ou au sein d'un solvant organique volatil tel que le toluène, l'heptane, le xylène, le tétrahydrofuranne et le tétrachloroéthylène.

Il est généralement souhaitable de chauffer le mélange réactionnel à une température comprise entre 60 et 120 °C pendant le temps nécessaire pour que la réaction soit complète. Par ailleurs on peut ajouter goutte à goutte le polymère à SiH sur le dérivé de formule (6) en solution dans un solvant organique, ou bien ajouter simultanément le polymère à SiH et le dérivé de formule (6) à une suspension de catalyseur dans un solvant organique..

On vérifie que la réaction est complète en dosant les SiH résiduels par la potasse alcoolique puis on élimine le solvant par exemple par distillation sous pression réduite.

L'huile brute obtenue peut être purifiée, par exemple par passage sur une colonne absorbante de silice.

Les polymères de formules (1) ou (2) présentent un indice de réfraction remarquablement élevé. Ils sont donc utilisables en particulier en mélange avec les compositions organiques ou organosiliciques utilisées pour enrober les fibres optiques, dans le cas où on recherche à obtenir un revêtement à indice élevé.

Par ailleurs les polymères de formules (1) ou (2) sont de remarquables lubrifiants de diverses matières platiques telles que : polyoléfines, polyesters et surtout PVC (polychlorure de vinyle) et permettent d'éviter le collage sur les outils et machines de mise en oeuvre de ces matières platiques.

Pour cette dernière application on incorpore de 0,001 à 3 parties en poids de polymère pour 100 parties en poids de matière plastique avant sa mise en oeuvre.

Les exemples suivants illustrent l'invention.

### - EXEMPLE 1 :

Préparation du polymère statistique de formule : 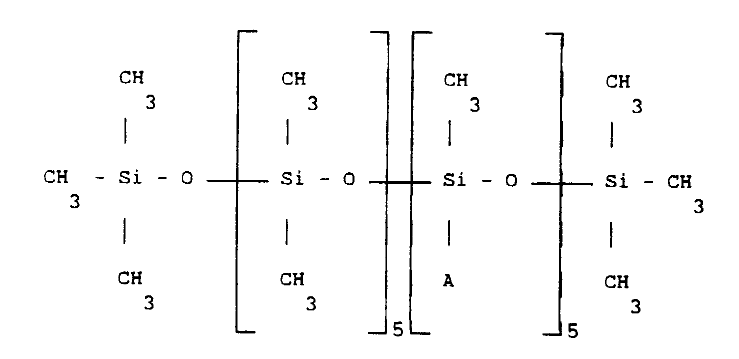
avec A représente : 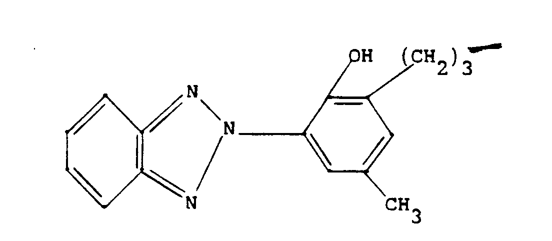
A une suspension de platine sur charbon à 5 % (70 mg) dans du toluène sec (5 ml) à 90-100 °C sous azote et sous agitation, on ajoute goutte à goutte en une heure 30 minutes, une solution dans du toluène (40 ml) de 17,1 g d'allyl-3 hydroxy-2 méthyl-5 phényl benzotriazole et 10,5 g du polymère statistique de formule ci-dessus ou A est un atome d'hydrogène, tout en maintenant la température entre 100 et 105 °C.

On laisse sous agitation et au reflux jusqu'à disparition des groupements SiH (absence de bande à 2 180 cm¹ en infra-rouge), soit 10 heures. On filtre sur papier, on élimine le solvant et on lave 3 fois à l'éthanol à 80 %. L'huile obtenue est reprise dans le chloroforme, séchée sur sulfate de sodium et filtrée sur célite pour éliminer les restes de platine colloïdal. On obtient après évaporation du solvant une huile jaune orange (poids 26 g, rendement : 95 %
- Spectre UV (CHCl₃) :: λ max : 307 mm,
λ max : 345 mm.

L'analyse par résonannce magnétique nucléaire (¹H et ²⁹ Si RMN) indique que ce produit a bien la structure souhaitée.

### - EXEMPLE 2 :

Dans un ballon tricol de 100 ml maintenu à 110 °C par un bain d'huile, muni d'une agitation magnétique et d'un réfrigérant ascendant, on charge 18,8 g (0,071 mole) d'allyl-3 hydroxy-2 méthyl-5 phénylbenzotriazole, 25 ml de toluène et 6 µl d'une solution dans l'hexane (à 8,45 % en poids de platine métal) d'un complexe de platine préparé à partir d'acide chloroplatinique et de divinyl-1,3 tétraméthyl-1,1-3,3 disiloxane comme décrit dans le brevet US-A-3 814 730.

On ajoute en deux heures 10 g d'un copolymère statistique à SiH de formule : 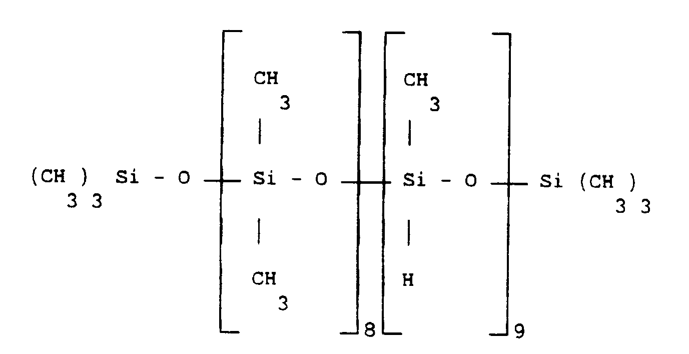
titrant 713 meq/100 g en fonction SiH (meq = milli-equivalent).

Au bout 7 heures de réaction on détermine, par dosage des SiH résiduels au moyen de potasse butanolique, que le taux de transformation des fonctions SiH est de 88 %.

On obtient alors une huile limpide, de couleur orangée de très forte viscosité après avoir éliminé le toluène par distillation à 110 °C sous pression réduite de 3,3 KPa.

On effectue une analyse de Résonnance Magnétique Nucléaire du proton (RMNH) à 360 MH_{z} dans CDCl₃ et on mesure les déplacements chimiques en ppm concernant la partie organopolysiloxane. 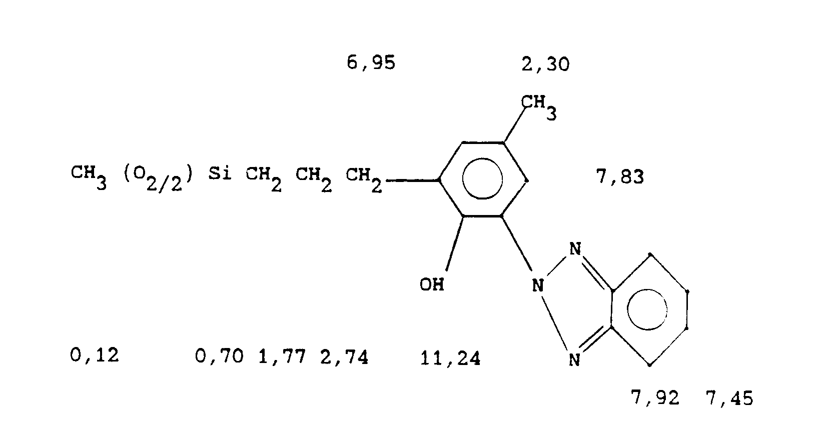
CH₃ (O_{2/2}) Si-H : 4,75
Le taux des dérivés de monomères allyl-3 hydroxy-2 méthyl-5 phenylbenzotriazole dans l'huile obtenue est de 7,6 % en poids (dosage GPC : chromatographie par permeation de gel - détection par réfractométrie).

### - EXEMPLE 3 :

On effectue exactement les mêmes opérations qu'à l'exemple 2 sauf que l'on utilise un rapport molaire allyl-3 hydroxy-2 méthyl-5 phenylbenzotriazole/SiH égal à 1,3 ; à savoir :
- 24,5 g d'allyl-3 hydroxy-2 méthyl-5 phenylbenzotriazole pour 10 g de polymère à SiH.

Après 7 heures de réaction le taux de transformation des fonctions SiH est de 98%. On obtient après élimination du toluène à 60 °C sous pression réduite de 0,6 KPa, 32,5 g d'une huile très visqueuse de couleur jaune orange contenant 16 % en poids de monomères résiduels.

L'élimination de ces monomères est effectuée par passage de l'huile en une colonne de gel de silice (support Kieselgel ART 7754, MERCK) avec comme solvant l'élution des monomères, un mélange 40/60 en volume de dichlorométhane/heptane et comme solvant d'élution de l'huile, l'acétate d'éthyle. Après élimination de l'acétate d'éthyle on obtient une gomme translucide de coloration organe contenant 65 % en poids de benzotriazole-greffée.

## Revendications

1. Un polymère diorganopolysiloxane modifié choisi parmi ceux de formule : 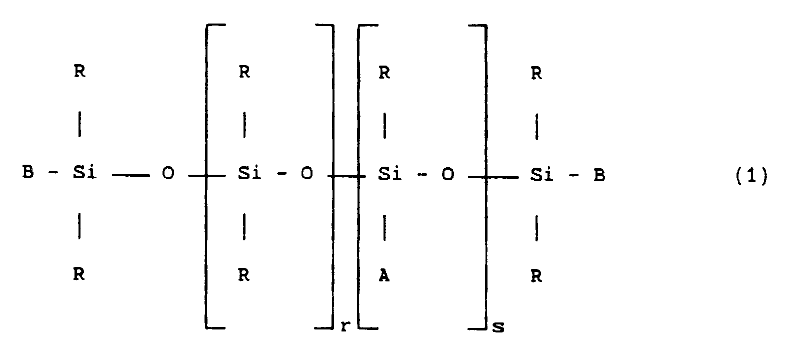 dans laquelle les symboles :
- R, identiques ou différents, sont choisis parmi les radicaux alkyle en C₁-C₁₀ , phényle et trifluoro-3,3,3 propyle, au moins 80 % en nombre des radicaux R étant méthyle,
- B, identiques ou différents, sont choisis parmi les radicaux R et le radical A,
- r est un nombre entier choisi entre 5 et 20 inclusivement,
- s est un nombre entier choisi entre 2 et 15 inclusivement
et de formule : 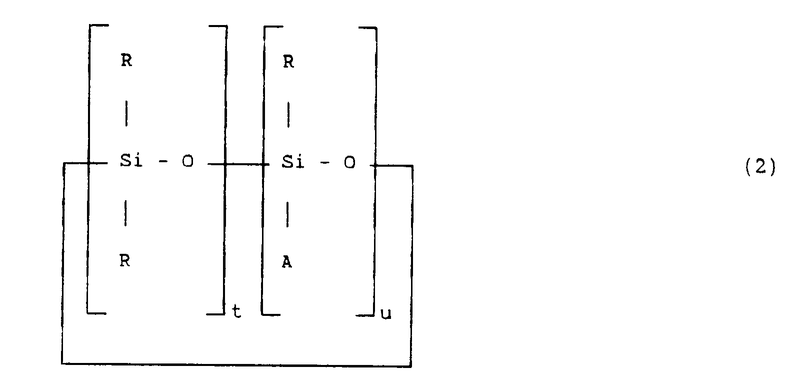 dans laquelle :
- R a la même signification qu'à la formule (1),
- u est un nombre entier compris entre 1 et 20 et
- t est un nombre entier entre 0 et 20 inclus,
- t + u est égal ou supérieur à 3.
Formules dans lesquelles A est un radical de formule 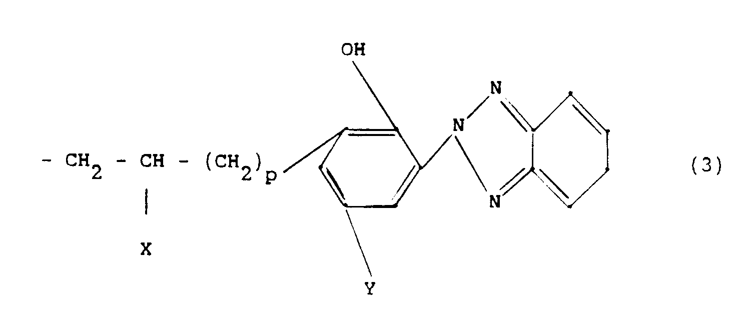 dans laquelle :
- X représente un atome d'hydrogène ou un radical alkyle en C₁-C₄,
- p représente un nombre entier compris entre 1 et 10,
- Y représente un atome d'hydrogène ou un radical alkyle linéaire ou ramifié en C₁-C₈.

2. Polymère selon la revendication 1, caractérisé en ce qu'il présente en outre au moins l'une des caractéristiques suivantes :
- R est méthyle
- B est méthyle
- Y est méthyle
- p = 1
- X est un atome d'hydrogène ou méthyle
- t + u est compris entre 3 et 10 inclus

3. Procédé de préparation d'un polymère tel que défini à la revendication 1 ou 2, caractérisé en ce qu'on effectue une réaction d'hydrosilylation en présence d'une quantité catalytiquement efficace d'un catalyseur au platine, d'un polymère à Si H choisi parmi ceux de formule : 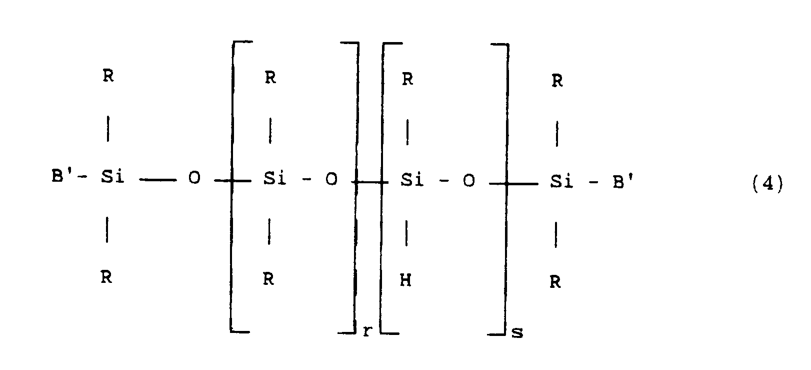 dans laquelle R, r et s ont la signification donnée ci-dessus pour la formule (1) et les radicaux B′, identiques ou différents, sont choisis parmi les radicaux R et un atome d'hydrogène,
et de formule : 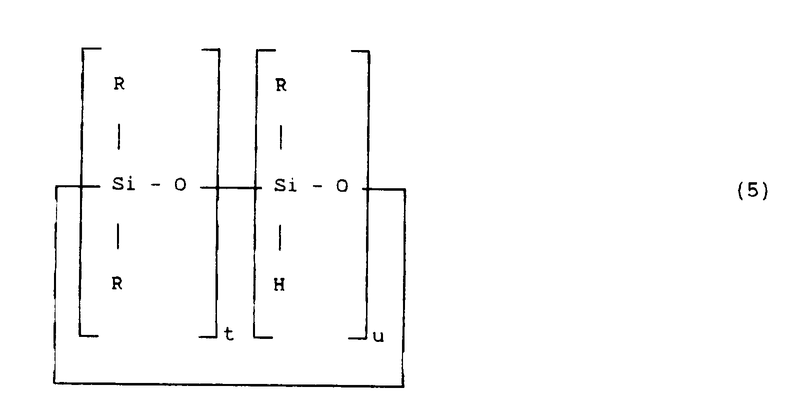 dans laquelle R, t et u ont la signification donnée ci-dessus pour la formula (2),
sur un dérivé organique de benzotriazole choisi parmi ceux de formule : 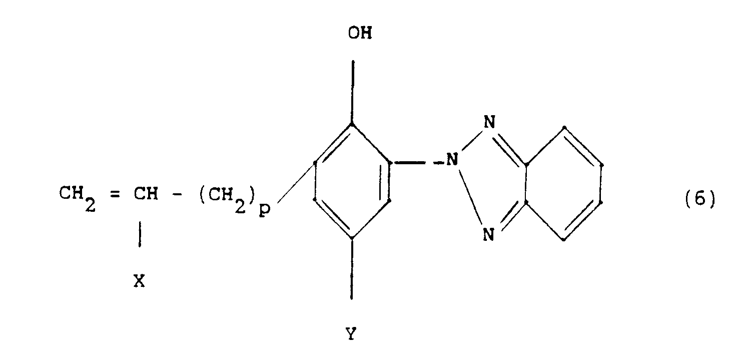 dans laquelle X,Y et p ont la même signification que ci-dessus.

## Claims

1. A modified diorganopolysiloxane polymer chosen from those of formula 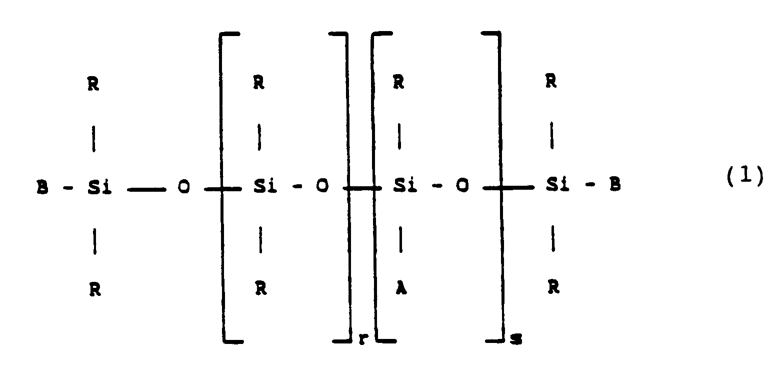 in which the symbols:
- R, which are identical or different, are chosen from C₁-C₁₀ alkyl, phenyl and 3,3,3-trifluoropropyl radicals, at least 80 % of the number of the R radicals being methyl,
- B, which are identical or different, are chosen from the radicals R and the radical A,
- r is an integer chosen between 5 and 20 inclusive,
- s is an integer chosen between 2 and 15 inclusive
and of formula: 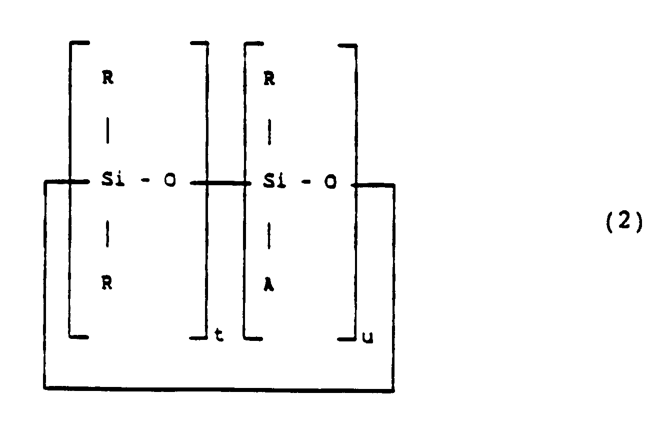 in which:
- R has the same meaning as in formula (1),
- u is an integer between 1 and 20 inclusive, and
- t is an integer between 0 and 20 inclusive,
- t + u is equal to or greater than 3
in which formulae A is a radical of formula 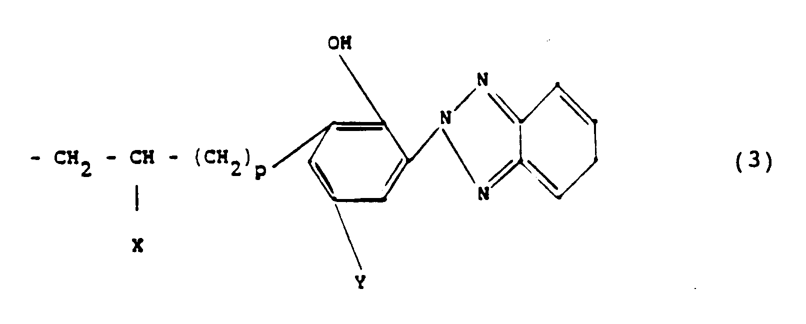 in which:
- X denotes a hydrogen atom or a C₁-C₄ alkyl radical,
- p denotes an integer between 1 and 10,
- Y denotes a hydrogen atom or a linear or branched C₁-C₈ alkyl radical.

2. Polymer according to Claim 1, characterised in that it additionally exhibits at least one of the following characteristics:
- R is methyl
- B is methyl
- Y is methyl
- p = 1
- X is a hydrogen atom or methyl
- t + u is between 3 and 10 inclusive.

3. Process for the preparation of a polymer such as defined in Claim 1 or 2, characterised in that a hydrosilylation reaction is carried out in the presence of a catalytically effective quantity of a platinum catalyst, of a SiH polymer chosen from those of formula: 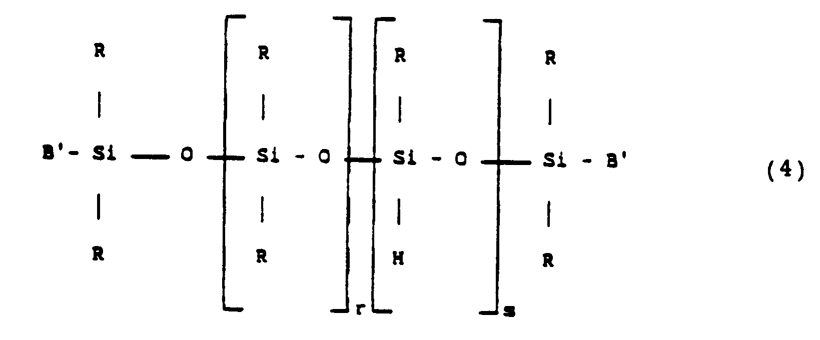 in which R, r and s have the meaning given above for formula (1) and the radicals B', which are identical or different, are chosen from the radicals R and a hydrogen atom,
and of formula 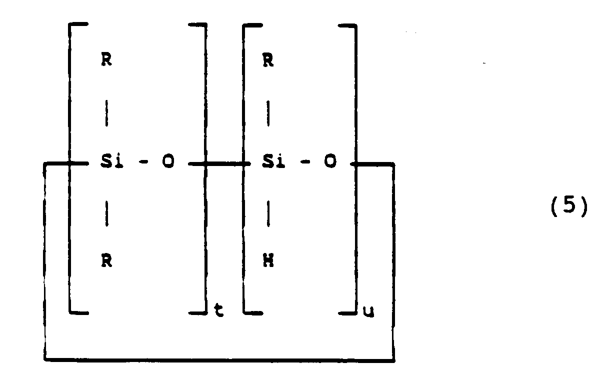 in which R, t and u have the meaning given above for formula (2),
with an organic benzotriazole derivative chosen from those of formula: 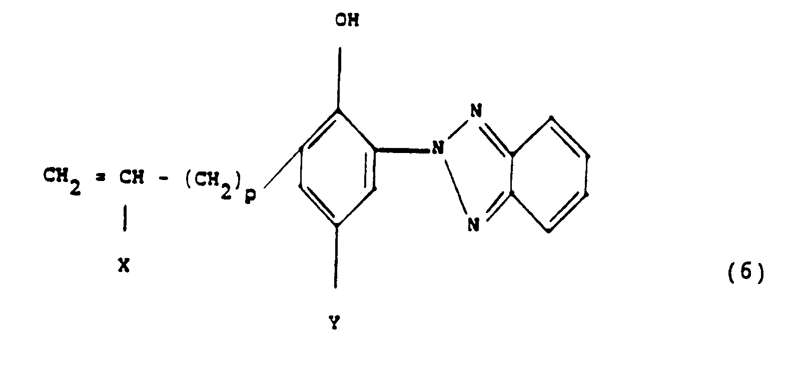 in which X, Y and p have the same meaning as above.

## Patentansprüche

1. Modifiziertes Diorganopolysiloxan-Polymeres, ausgewählt unter denjenigen der Formel 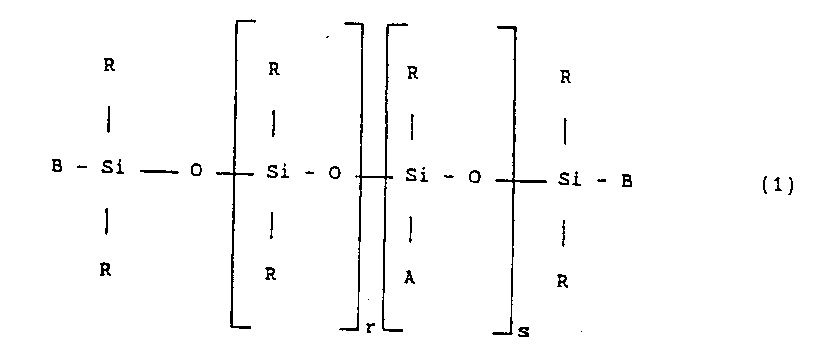 worin die Symbole:
- R, die identisch oder verschieden sind, ausgewählt sind unter den Resten C₁-C₁₀-Alkyl, Phenyl und 3,3,3-Trifluorpropyl, wobei mindestens 80 % der Zahl der Reste R Methyl ist,
- B, die identisch oder verschieden sind, ausgewählt sind unter den Resten R und dem Rest A,
- r ist eine ganze Zahl, ausgewählt zwischen 5 und 20 einschließlich,
- s ist eine ganze Zahl, ausgewählt zwischen 2 und 15 einschließlich,
und der Formel 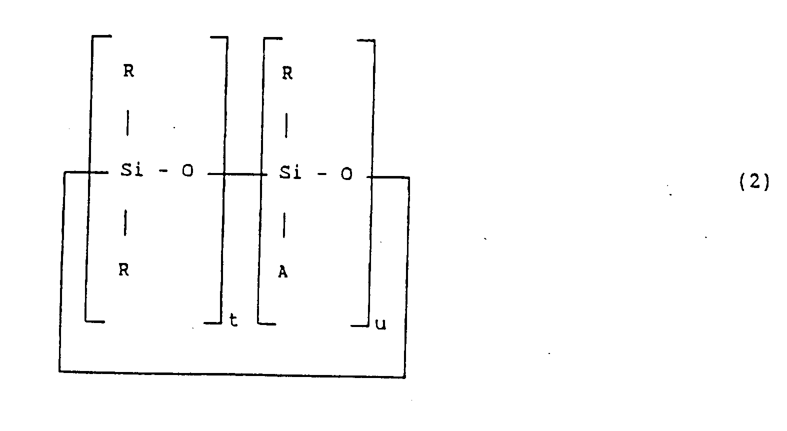 worin:
- R die gleiche Bedeutung hat wie in Formel (1),
- u eine ganze Zahl zwischen 1 und 20 ist und
- t eine ganze Zahl zwischen 0 und 20 einschließlich ist,
- t + u gleich oder größer als 3 ist.
Formeln, worin A ein Rest der Formel 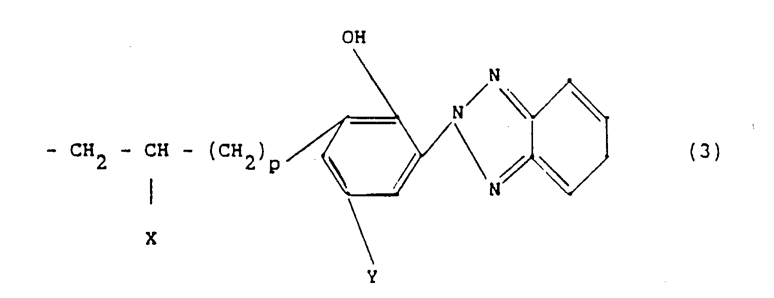 ist, worin
- X ein Wasserstoffatom oder einen C₁-C₄-Alkylrest bedeutet,
- p eine ganze Zahl zwischen 1 und 10 darstellt,
- Y ein Wasserstoffatom oder einen linearen oder verzweigten C₁-C₈-Alkylrest bedeutet.

2. Polymeres gemäß Anspruch 1, dadurch gekennzeichnet, daß es außerdem mindestens eines der folgenden Charakteristika:
- R ist Methyl
- B ist Methyl
- Y ist Methyl
- p = 1
- X ist ein Wasserstoffatom oder Methyl
- t + u ist zwischen 3 und 10 einschließlich, aufweist.

3. Verfahren zur Herstellung eines Polymeren, wie es in Anspruch 1 oder 2 definiert ist, dadurch gekennzeichnet, daß man eine Hydrosilylierungsreaktion in Gegenwart einer katalytisch wirksamen Menge eines Platinkatalysators, eines Polymeren mit SiH, ausgewählt unter denjenigen der Formel 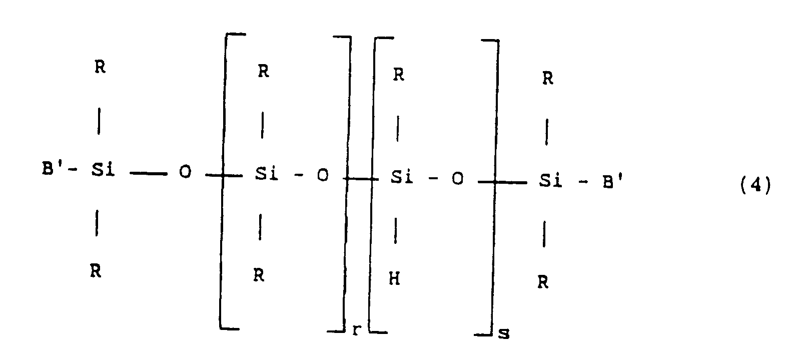 worin R, r und s die vorstehend für die Formel (1) angegebene Bedeutung haben und die Reste B', die identisch oder verschieden sind, ausgewählt sind unter den Resten R und einem Wasserstoffatom, und der Formel 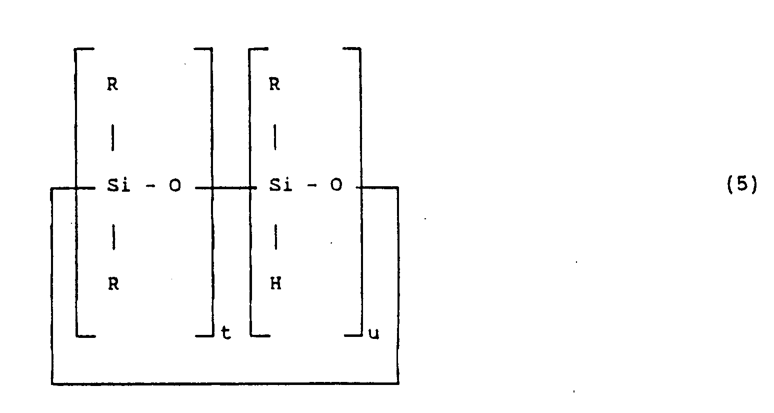 worin R, t und u die vorstehend für die Formel (2) angegebene Bedeutung haben,
mit einem organischen Benzotriazolderivat, ausgewählt unter denjenigen der Formel 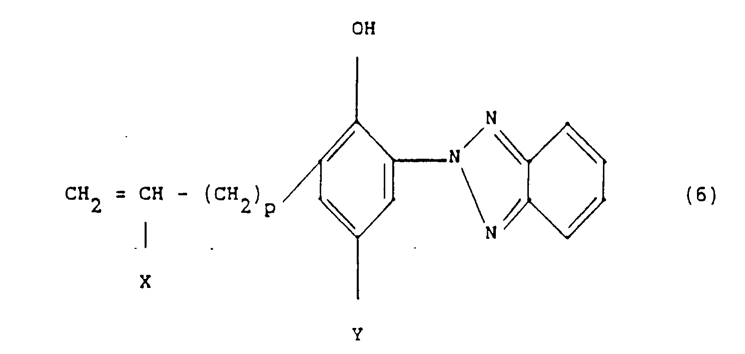 worin X, Y und p die vorstehend angegebene Bedeutung haben, bewirkt.
